# EUROPEAN PATENT SPECIFICATION

(11) **EP 1 734 696 B1**
(45) Date of publication and mention of the grant of the patent: **28.11.2007**
(21) Application number: 05291281.3
(22) Date of filing: 14.06.2005
(51) Int. Cl.: H04L 12/28, H04Q 7/38, H04L 29/06

(54) **Method for sending downstream traffic from a switching center**
Verfahren zum Senden von Abwärtsverkehr von einer Vermittlungsstelle
Procédé pour envoyer trafic descendant d'un centre de commutation

(43) Date of publication of application: 20.12.2006
(73) Proprietor: Alcatel Lucent, 75008 Paris (FR)
(72) Inventor: De Juan Huarte, Frederico, 75014 Paris (FR)
(74) Representative: Schmidt, Werner Karl

(56) References cited:
- EP-A- 0 483 544
- EP-A- 0 605 957
- EP-A- 0 860 959
- IEEE: "IEEE Std 802.1D-2004, IEEE Standard for Local and metropolitan area networks - Media Access Control (MAC) Bridges" IEEE STANDARDS, [Online] 9 June 2004 (2004-06-09), page 1,2,29-56, XP002353250 Retrieved from the Internet: URL:http://grouper.ieee.org/groups/802/1/> [retrieved on 2005-11-09]

## Description

### Field of the invention

The present invention relates to a method for sending downstream traffic from a switching center over at least two paths to a mobile node of a L2 (layer 2 of the OSI model) network. The present invention relates as well to a switching center for performing this method.

### Background and prior art

In the context of mobility, hand-over processes are an important issue. A mobile terminal is serviced by different base stations of a radio network, depending on the actual position of the mobile terminal. In contrast to upstream frames (from the mobile terminal to the network) that are always sent to the next base station and then forwarded inside the network, downstream frames (from the network to the mobile terminal) encounter the problem that during or just after hand-over, the base station through which the mobile terminal can be reached is not necessarily determined. Different base stations are equivalent to different paths to and from the mobile terminal, the mobile terminal being a node of the network.

In terms of L2 (layer 2 of the OSI model) networks or, in other words, networks on the level of the data link layer, one standard is IEEE 802 defining a logic data control layer and a media access control (MAC) layer constituting the data link layer. Each node of the L2 network is identified by a MAC address permanently assigned to the node, independently of the link or path.

The forwarding of ingress frames in an 802 MAC layer is standardized in IEEE 802.1d (IEEE 802.1D-2004: Local and metropolitan area networks, Media Access Control (MAC) Bridges). One feature of this forwarding process is, that a unicast frame, whose destination address has been learned, can only be buffered for transmission on one port at any one time and cannot be duplicated.

In case of mobile terminals, the hand-over is handled by e.g. "MAC in MAC", VLAN (virtual local area network), or MPLS (multiple protocol layer switching). These are all means to tunnel traffic in L2 networks. The setup and management of tunnels increase both the capital and the operational expenditure concerning the control plane operations of the L2 network as well as cause an overhead penalty.

It is an object of the present invention to provide a further possibility of forwarding frames causing less expenditure and overhead.

### Summary of the invention

In a first aspect of the present invention, this object is achieved by a method for sending downstream traffic from a switching center over at least two different paths to a mobile node of a L2 network, said method comprising the steps of:
- checking the upstream traffic from the mobile node, whether its path already exists as entry associated to the mobile node in a forwarding information database of the switching center;
- checking whether a mobility enhanced switching parameter is enabled;
- upon detection of a path not yet existing as entry associated to the mobile node in the forwarding information database and upon detection of the mobility enhanced switching parameter being enabled, adding the new path associated to the mobile node to the forwarding information database;
- forwarding as many downstream frames to the mobile node as paths are entered in the forwarding information database as associated to the mobile node.

In essence, the present invention allows for a dual or multiple paths towards the mobile node, i.e. via the old and via the new path(s). Downstream traffic is automatically sent not only to the old location(s), but also to the new location(s).

As soon as a path change is detected in the upstream traffic, the forwarding information is updated accordingly by adding the new entry or entries concerning the mobile node and its associated paths, i.e. the new entry or entries are appended without immediately deleting the old entry or entries concerning this mobile node and its associated paths. The forwarding process then forwards as many copies of the downstream frame as entries corresponding to the respective mobile node in the forwarding information database exist.

In case one wants or use the special forwarding according to the present invention only sometimes, for example to modify the IEEE 802.1d standard temporarily, a mobility enhanced switching parameter is introduced. If this parameter is enabled, forwarding is handled according to the present invention. If this parameter is not enabled, forwarding is handled according to prior art, for example according IEEE 802.1d and, if necessary using one of the above-mentioned tunneling mechanisms.

The method according to the present invention allows for optimal packet flow integrity and minimum jitter in case of a path change, i.e. due to a hand-over. Since there is no need according to the present invention to setup and maintain any tunnels, the control plane is much simpler and thus operational expenditure is reduced. The capital expenditure is reduced as well due to cheaper network elements, e.g. base station, gateway, since the required protocol stack is minimized.

Further advantages are, that the data plane performance is better, too. Since there is less overhead in the data plane without the need of en- and decapsulating frames, the throughput is higher. This is particularly important in view of providing real time services.

Preferably, the mobile node is identified by a MAC address according to IEEE 802.1d.

The method according to the present invention is advantageously applied in radio network, where the mobile node is a mobile terminal of the radio network and the at least two different paths correspond to a base station each servicing the mobile terminal.

Preferably, the method according to the present invention comprises the further step of ageing the former base station entry(ies) in the forwarding information database. This has the advantage that some time after hand-over, the forwarding information database is "cleaned up" and only the entries corresponding to the actual situation are left over. This lapse of time is called "ageing time-out" in IEEE 802.1d. Thus, multiple path forwarding is provided only during hand-over and eventually shortly after hand-over, and then forwarding only over the actual path or respectively to the actual base station(s) is resumed. This avoids using resources for multicasting unnecessarily.

In a second aspect of the present invention, this object is achieved by a switching center for sending downstream traffic over at least two different paths to a mobile node of a L2 network, with
- detecting means for detecting the status of a mobility enhanced switching parameter;
- handling means cooperating with the detecting means, for handling a forwarding information database binding paths and mobile nodes, and in case of occurrence of a path not yet existing in the forwarding information database as entry associated to the mobile node, adding it as new entry to the forwarding information database depending on the detected status of the mobility enhanced switching parameter;
- forwarding means for forwarding as many downstream frames to the mobile node as paths associated to the mobile node entered in the forwarding information database.

The handling means updates the forwarding information database in case of a path change by appending new entries instead of overwriting them. In consequence, the forwarding means forwards downstream frames not only via the new path(s), but also via the old path(s). The switching center has detecting means for detecting the status of a mobility enhanced switching parameter. This is especially useful, when utilizing the switching center in an IEEE 802.1d environment.

Preferably, the handling means is arranged to identify the mobile node by a MAC address.

In preferred embodiments, the forwarding means is arranged to forward the downstream frames to a mobile terminal of a radio network over base stations corresponding to a different path each.

Preferably, the switching center has in addition detecting means for detecting a change of the base station serving the mobile terminal by the switching center itself. It has shown to be advantageous to detect a change in bases stations by receiving upstream traffic from at least one base station not yet associated to the mobile terminal in the forwarding information database. Detection can then be done by the switching center. Other possibilities would be to provide dedicated signals from some network control entity to the switching center. This applies as well to generally forwarding frames to mobile node over various paths.

### Brief description of the drawings

A detailed description of the invention is provided below. Said description is provided by way of a non-limiting example to be read with reference to the attached drawings in which:
- Figure 1: shows a flowchart of an embodiment of the method according to the present invention;
- Figure 2a: illustrates the situation of a mobile terminal being serviced by a first base station;
- Figure 2b: illustrates the situation of a mobile terminal being serviced by a second base station just after the base station change;
- Figure 2c: illustrates the situation of a mobile terminal being serviced by the second base station some time after the base station change;
- Figure 3: shows a schematic view of an embodiment of the switching center according to the present invention, and
- Figure 4: shows schematically the structure of a forwarding information database.

### Detailed description of the invention

The present invention will be exemplarily explained with respect to a radio network with a mobile terminal serviced by one or more base stations.

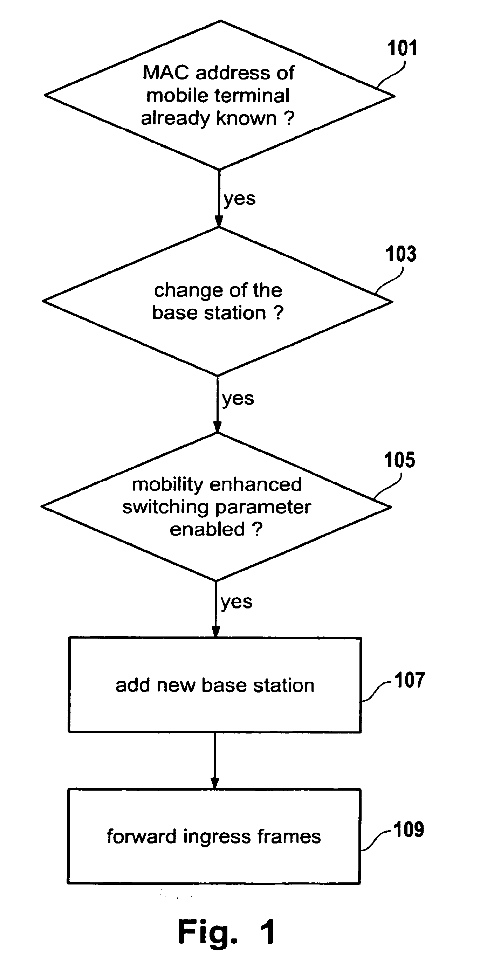

Figure 1 shows a schematic flowchart of an embodiment of the method according to the present invention. In the present example, as first step 101 it is checked, whether the MAC address, respectively the mobile terminal identified by it, is already known. If not, the switching continues in a conventional way.

If the MAC address is already known, a change of the base station servicing a mobile terminal is detected (step 103). The base station change is detected inside the switching center with a forwarding information database by comparing upstream traffic coming from the mobile terminal via a certain base station, i.e. via a certain path, with the entries in the forwarding information database binding the MAC address of the mobile terminal with certain paths corresponding to base stations, this having the function of an egress interface to the switching center. If the actual combination of mobile terminal, i.e. MAC address, and base station, i.e. egress interface or path over base station, is not to be found in the forwarding information database, a change of the base station servicing the mobile terminal has occurred.

If such a change has been detected, the status of the mobility enhanced switching (MES) parameter is checked (step 105). The MES parameter indicates, whether forwarding to several base stations is allowed or not. This parameter may be set by a L2 network control entity, and may differ, e.g. for various mobile terminals or various base stations in heterogeneous networks with hardware of different kinds.

In case both a base station change has occurred and the MES parameter is enabled, the forwarding information database is updated by appending the new pair of mobile terminal address and egress interface (step 107) without overwriting former pairs concerning this specific mobile terminal. Thus, immediately after a base station change, i.e. during or shortly after a hand-over, at least two entries concerning the same mobile terminal are in the forwarding information database, the one using the former base station and the one using the latter base station.

If there is subsequent downstream traffic to the mobile terminal, the downstream frames are forwarded (step 109) according to the entries of the forwarding information database. In the present example, two copies are forwarded, one via the former base station and one via the latter base station. This makes sure that the downstream traffic really reaches the mobile terminal and is not lost because of being sent only to a base station not servicing the mobile terminal in the present moment.

The forwarding in case of terminal mobility according to the present invention allows for optimal packet flow integrity and minimum jitter in case of a hand-over. Since there is no need according to the present invention to setup and maintain any tunnels, the control plane is much simpler and thus reduced operational expenditure. The capital expenditure is reduced as well due to cheaper network elements, e.g. base station, gateway, since the required protocol stack is minimized.

Further advantages are, that the data plane performance is better, too. Since there is less overhead in the data plane without the need of en- and decapsulating frames, the throughput is higher. This is particularly important in view of providing real time services.

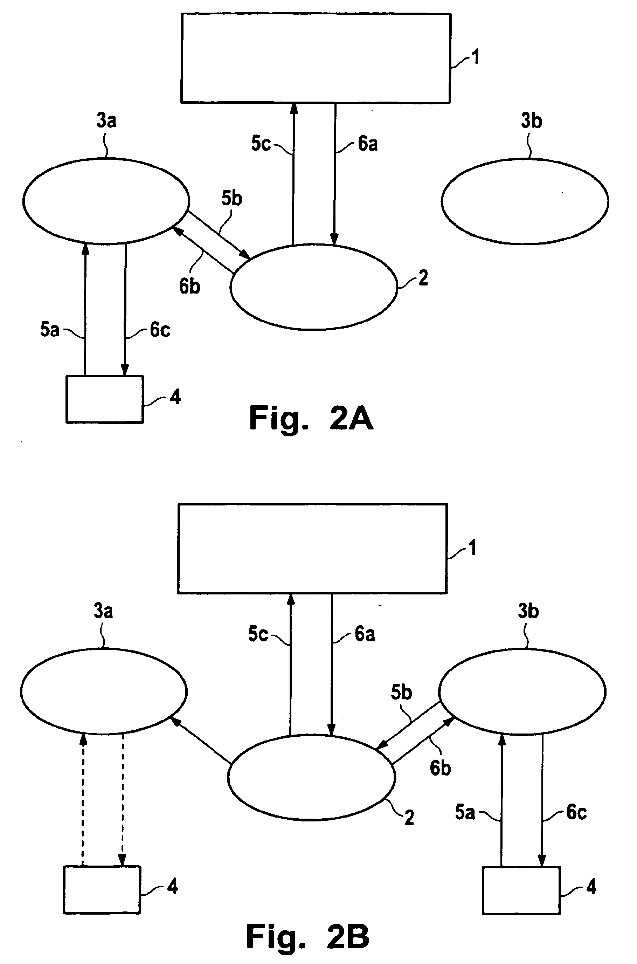

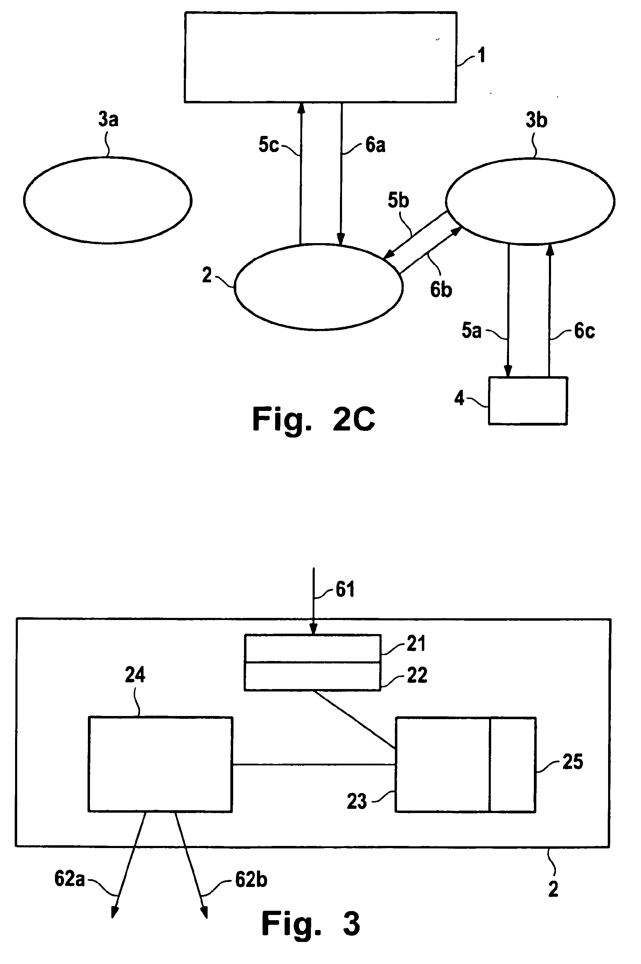

The situation before, just after and sometime after hand-over is illustrated in Figures 2a-c. In Figure 2a, the mobile terminal 4 sends upstream traffic 5a,b,c to the base station controller 1, that will process the traffic according to its kind, via base station 3a and switching center 2. Downstream traffic 6a,b,c is sent from the base station controller 1 to the switching center 2. There, it is looked up in the forwarding information database of the switching center 2, via which base station the ingress frames are to be sent to the specific mobile terminal 4. As for the moment the mobile terminal 4 is quasi-fixed, the forwarding information database contains exactly one entry showing that the mobile terminal 4 is service by base station 3a, and the ingress frames are forwarded to base station 3a by the switching center in a conventional way, for example according to IEEE 802.1d.

In Figure 2b, the mobile terminal 4 has moved to the service region of base station 3b. The first time upstream traffic 5a,b,c is sent via base station 3b, the forwarding information database of the switching center 2 is updated without deleting the old entry concerning base station 3a, eventually only after checking, whether a MES parameter is enabled. In consequence, the ingress frames of downstream traffic 6a,b,c,d arriving at switching center 2 are forwarded to both base station 3a (arrow 6d) and base station 3b (arrow 6b) to avoid loosing ingress frames. The uncertainty on the level of the switching center 2 on which base station 3a, 3b is servicing the mobile terminal 4 is symbolized by the dashed-line terminal 4 with dashed-line connections to the former base station 3a.

To economize resources, the old entry in the forwarding information database is aged, i.e. after a predefined time the entry is deleted from the database. The ageing time is predefined such that it is made sure, that hand-over is completed and the mobile terminal 4 is serviced only by the new base station anymore. Ageing is also a part of the normal operation of IEEE 802.1d. Thus, ageing is not a hindrance to embedding the forwarding according to the present invention in an IEEE 802.1d environment.

Figure 3 shows more in detail the switching center 2. As an ingress frame 61 arrives at the switching center 2,the first detecting means 21 checks, whether a change of base station has occurred, and the second detecting means 22 checks, whether the MES parameter is enabled. Both detecting means 21, 22 can be designed to check only upstream traffic, if e.g. the base station change is to be detected as explained before. In configurations, where the information for updating the forwarding information database 25 comes from the control plane, the actual information may be part of downstream or upstream traffic at the switching center 2.

Depending on the information contained in the downstream traffic, handling means 23 updates the forwarding information database 25, either conventionally or according to the present invention, or only reads out the forwarding information database 25 and gives the information on whereto to forward ingress frame 61 to the forwarding means 24. In case MES was enabled and the mobile terminal is involved in a hand-over, i.e. the former entry has not yet been deleted due to ageing, the forwarding means receives two paths through which to reach the mobile terminal. Thus, the forwarding means 24 generates two copies of the ingress frame 61 and forwards one to the former base station (egress frame 62a) and one to the latter base station (egress frame 62b).

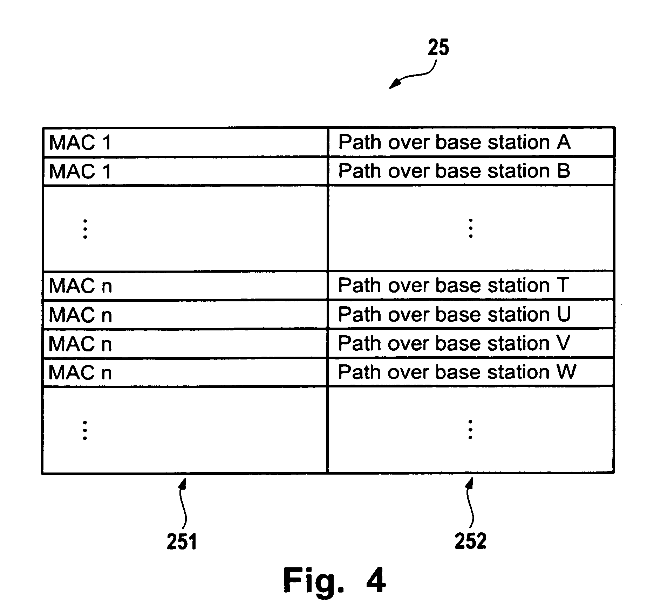

Figure 4 shows schematically the structure of forwarding information database 25. The mobile terminals are identified by MAC addresses (column 251) and associated with the different paths over different base stations (column 252). For example, for the mobile terminal corresponding to the address MAC 1, there are two entries, path over base station A and path over base station B. This could reflect the situation of an actual hand-over between base station A and base station B. Or it could reflect the more complex situation, that the mobile terminal MAC 1 is serviced continually by both base stations A, B.

Concerning the mobile terminal identified by MAC n, there are even four entries. This could, too, reflect the situation of several base stations T, U, V, W servicing mobile terminal MAC n, continually and/or due to hand-overs. In particular, this could reflect the situation that the mobile terminal is moving faster than expected, when the ageing time was set, the ageing time being too long to react to the fast changes of base stations.

### List of Reference Numerals

- 1: base station controller
- 2: switching center
- 21: first detection means
- 22: second detection means
- 23: handling means
- 24: forwarding means
- 25: forwarding information database
- 251: mobile terminal column
- 252: path column
- 3a,b: base station
- 4: mobile terminal
- 5a,b,c: upstream traffic
- 6a,b,c,d: down stream traffic
- 61: ingress frame
- 62a,b: egress frame
- 101: step
- 103: step
- 105: step
- 107: step
- 109: step

## Claims

1. A method for sending downstream traffic from a switching center (2) over at least two different paths (3a, 3b) to a mobile node (4) of a L2, layer 2 of the OSI model, network, said method comprising the steps of:
- checking the upstream traffic from the mobile node, whether its path already exists as entry associated to the mobile node (4) in a forwarding information database (25) of the switching center;
- checking whether a mobility enhanced switching parameter is enabled;
- upon detection of a path not yet existing as entry associated to the mobile node (4) in the forwarding information database (25) and upon detection of the mobility enhanced switching parameter being enabled, adding the new path associated to the mobile node to the forwarding information database (25);
- forwarding as many downstream frames to the mobile node (4) as paths are entered in the forwarding information database (25) as associated to the mobile node (4).

2. The method according to claim 1, wherein the mobile node (4) is identified by a media access control address.

3. The method according to claim 1 or 2, wherein the mobile node (4) is a mobile terminal of a radio network and the at least two different paths correspond to a base station each servicing the mobile terminal.

4. The method according to any of claims 1 to 3, comprising the further step of
- ageing the former path entry/entries in the forwarding information database.

5. A switching center (2) for sending downstream traffic (6a,b,c,d) over at least two different paths (3a, 3b) to a mobile node (4) of a L2, layer 2 of the OSI model, network, with
- detecting means (22) for detecting the status of a mobility enhanced switching parameter;
- handling means (23) cooperating with the detecting means (22), for handling a forwarding information database (25) binding paths (3a,b) and mobile nodes (4), and in case of occurrence of a path (3a, 3b) not yet existing in the forwarding information database (25) as entry associated to the mobile node (4), adding it as new entry to the forwarding information database, depending on the detected status of the mobility enhanced switching parameter;
- forwarding means (24) for forwarding as many downstream frames (61) to the mobile node (4) as paths associated to the mobile node (4) entered in the forwarding information database (25).

6. The switching center according to claim 5, wherein the handling means (23) is arranged to identify the mobile node (4) by a media access control address.

7. The switching center according to claim 5 or 6, wherein the forwarding means (24) is arranged to forward the downstream frames (61) to a mobile terminal (4) of a radio network over base stations (3a, 3b) corresponding to a different path each.

8. The switching center according to any of claims 5 to 7, with in addition
- detecting means (21) for detecting a change of path (3a, 3b) in the upstream traffic from the mobile node (4).

## Patentansprüche

1. Verfahren zum Senden von Abwärts-Datenverkehr von einer Vermittlungsstelle (2) über mindestens zwei verschiedene Pfade (3a, 3b) an einen Mobilknoten (4) eines L2-Netzwerks (Schicht 2 des OSI-Modells), wobei dieses Verfahren die folgenden Schritte umfasst:
- Überprüfen des Aufwärts-Datenverkehrs von dem Mobilknoten und Feststellen, ob sein Pfad bereits als ein dem Mobilknoten (4) zugeordneter Eintrag in einer Weiterleitungsinformations-Datenbank (25) der Vermittlungsstelle vorhanden ist;
- Prüfen, ob ein Vermittlungsparameter zur Verbesserung der Mobilität aktiviert ist;
- nach dem Erkennen eines Pfads, der bisher nicht als ein dem Mobilknoten (4) zugeordneter Eintrag in der Weiterleitungsinformations-Datenbank (25) der Vermittlungsstelle vorhanden ist und nach der Feststellung, dass der Vermittlungsparameter zur Verbesserung der Mobilität aktiviert ist, Hinzufügen des neuen dem Mobilknoten zugeordneten Pfads zur Weiterleitungsinformations-Datenbank (25) ;
- Weiterleiten so vieler Abwärtsrahmen an den Mobilknoten (4), wie Pfade in der Weiterleitungsinformations-Datenbank (25) als dem Mobilknoten (4) zugeordnete Einträge vorhanden sind.

2. Verfahren gemäß Anspruch 1, wobei der Mobilknoten (4) durch eine Media Access Control-Adresse **gekennzeichnet** ist.

3. Verfahren gemäß Anspruch 1 oder 2, wobei der Mobilknoten (4) ein Mobil-Endgerät eines Funknetzwerks ist und die mindestens zwei verschiedenen Pfade einer Basisstation entsprechen, die jeweils das Mobil-Endgerät versorgen.

4. Verfahren gemäß Anspruch 1 bis 3, das des Weiteren den folgenden Schritt umfasst:
- Veralten der vorherigen Pfadeinträge in der Weiterleitungsinformations-Datenbank.

5. Vermittlungsstelle (2) zum Senden von Abwärts-Datenverkehr (6a,b,c,d) über mindestens zwei verschiedene Pfade (3a, 3b) an einen Mobilknoten (4) eines L2-Netzwerks (Schicht 2 des OSI-Modells) mit
- Erkennungsmitteln (22) zum Erkennen des Status eines Vermittlungsparameters zur Verbesserung der Mobilität;
- Handhabungsmitteln (23) zur Verarbeitung, in Verbindung mit den Erkennungsmitteln (22), einer Weiterleitungsinformations-Datenbank (25), die Pfade (3a,3b) und Mobilknoten (4) zuordnet, und beim Auftreten eines in der Weiterleitungsinformations-Datenbank (25) als Eintrag für einen Mobilknoten (4) noch nicht vorhandenen Pfads (3a,3b) diesen Eintrag der Weiterleitungsinformations-Datenbank als neuen Eintrag hinzufügt, je nach dem erkannten Status des Vermittlungsparameters zur Verbesserung der Mobilität;
- Weiterleitungsmitteln (24) zum Weiterleiten so vieler Abwärtsrahmen (61) an den Mobilknoten (4), wie dem Mobilknoten (4) Pfade in der Weiterleitungsinformations-Datenbank (25) zugeordnet sind.

6. Vermittlungsstelle gemäß Anspruch 5, wobei die Handhabungsmittel (23) so angeordnet sind, dass sie den Mobilknoten (4) anhand einer Media Control Adresse kennzeichnen.

7. Vermittlungsstelle gemäß Anspruch 5 oder 6, wobei die Weiterleitungsmittel (24) so angeordnet sind, dass sie die Abwärtsrahmen (61) an ein Mobil-Endgerät (4) eines Funknetzwerks über Basisstationen (3a,3b) weiterleiten, die jeweils einem anderen Pfad entsprechen.

8. Vermittlungsstelle gemäß Anspruch 5 bis 7 mit der folgenden Ergänzung:
- Erkennungsmittel (21) zum Erkennen eines Pfadwechsels (3a,3b) im Aufwärts-Datenverkehr vom Mobilknoten (4).

## Revendications

1. Procédé permettant d'envoyer un trafic descendant d'un central téléphonique (2) sur au moins deux chemins différents (3a, 3b) à un noeud mobile (4) d'un réseau L2, ledit procédé comprenant les étapes suivantes :
vérification du trafic montant depuis le noeud mobile (4), pour savoir si son chemin existe déjà comme entrée associée au noeud mobile (4) dans une base de données d'information de transfert (25) du central téléphonique ;
vérification de si un paramètre de commutation à mobilité évoluée est activé ;
suite à la détection du fait qu'aucun chemin n'existe encore comme entrée associée au noeud mobile (4) dans la base de données d'information de transfert (25) et suite à la détection du fait que le paramètre de commutation à mobilité évoluée est activé, ajout du nouveau chemin associé au noeud mobile dans la base de données d'information de transfert (25) ;
transfert d'autant de trames descendantes vers le noeud mobile (4) qu'il y a de chemins entrés dans la base de données d'information de transfert (25) associés au noeud mobile (4).

2. Procédé selon la revendication 1, dans lequel le noeud mobile (4) est identifié par une adresse de contrôle d'accès au support.

3. Procédé selon la revendication 1 ou 2, dans lequel le noeud mobile (4) est un terminal mobile d'un réseau de radiocommunication et les au moins deux chemins différents correspondent à une station de base desservant chacune le terminal mobile.

4. Procédé selon l'une quelconque des revendications 1 à 3, comprenant l'étape supplémentaire suivante :
vieillissement de fentrée/des entrées de chemin précédente(s) dans la base de données d'information de transfert.

5. Central téléphonique (2) permettant d'envoyer du trafic descendant sur au moins deux chemins différents (3a, 3b) à un noeud mobile (4) d'un réseau L2, comprenant :
un moyen de détection (22) pour détecter l'état d'un paramètre de commutation à mobilité évoluée ;
un moyen de gestion (23) coopérant avec le moyen de détection (22), pour gérer une base de données d'information de transfert (25) reliant des chemins (3a, 3b) et des noeuds mobiles (4), et au cas où aucun chemin (3a, 3b) n'existe encore dans la base de données d'information de transfert (25) comme entrée associée au noeud mobile (4), pour l'ajouter en tant que nouvelle entrée dans la base de données d'information de transfert, en fonction de l'état détecté du paramètre de commutation à mobilité évoluée ;
un moyen de transfert (24) pour transférer autant de trames descendantes (61) vers le noeud mobile (4) qu'il y a de chemins associés au noeud mobile (4) entrés dans la base de données d'information de transfert (25).

6. Central téléphonique selon la revendication 5, dans lequel le moyen de gestion (23) est agencé pour identifier le noeud mobile (4) au moyen d'une adresse de contrôle d'accès au support.

7. Central téléphonique selon la revendication 5 ou 6, dans lequel le moyen de transfert (24) est agencé pour transférer les trames descendantes (61) à un terminal mobile (4) d'un réseau de radiocommunication via des stations de base (3a, 3b) correspondant chacune à un chemin différent.

8. Central téléphonique selon l'une quelconque des revendications 5 à 7, possédant de plus :
un moyen de détection (21) pour détecter un changement de chemin (3a, 3b) dans le trafic montant depuis le noeud mobile (4).
